# FASCICULE DE BREVET EUROPEEN

(11) **EP 1 181 978 B1**
(45) Date de publication et mention de la délivrance du brevet: **06.02.2008**
(21) Numéro de dépôt: 01402167.9
(22) Date de dépôt: 14.08.2001
(51) Int. Cl.: B01J 23/62, B01J 37/02, C10G 35/09

(54) **Catalyseur bimétallique supporté comportant une forte interaction entre un métal du groupe VIII de l'étain et son utilisation dans un procédé de reformage catalytique**
Bimetallischer Trägerkatalysator mit einer starken Interaktion zwischen einem Metall der Grupe VIII und Zinn und seine Verwendung für ein katalytisches Refomierungsverfahren
Bimetallic supported catalyst having a strong interaction between a metal of the group VIII and tin and the use thereof in a catalytic reforming process

(30) Priorité: 23.08.2000 FR 0010878
(43) Date de publication de la demande: 27.02.2002
(73) Titulaire: Institut Français du Pétrole, 92852 Rueil-Malmaison Cedex (FR)
(72) Inventeur: Le Peltier, Fabienne, 92500 Rueil-Malmaison (FR); Didillon, Blaise, 69340 Francheville (FR); Jumas, Jean-Claude, 34830 Jacou (FR); Olivier-Fourcade, Josette, 34830 Jacou (FR)

(56) Documents cités:
- EP-A- 0 913 198
- US-A- 4 020 012
- TOMOYA INOUE ET AL: "CHARACTERIZATION OF PT-SN/SIO2 CATALYSTS AND THE ROLE OF SN IN NO-HYDROCARBON REACTIONS" JOURNAL OF THE CHEMICAL SOCIETY. FARADAY TRANSACTIONS,GB,ROYAL SOCIETY OF CHEMISTRY, CAMBRIDGE, vol. 92, no. 3, 7 février 1996 (1996-02-07), pages 461-467, XP000551908 ISSN: 0956-5000

## Description

La présente invention concerne un nouveau catalyseur supporté renfermant au moins un métal du groupe VIII et au moins un métal additionnel constitué par l'étain dont au moins une partie est en forte interaction avec ledit métal du groupe VIII. L'invention concerne également l'utilisation dudit catalyseur dans les principaux procédés de transformation d'hydrocarbures qu'utilisent le raffinage du pétrole et en particulier dans les procédés de réformage catalytique.

### Art antérieur

Les brevets et publications démontrant que l'addition de promoteurs à un métal de base améliore les performances des catalyseurs sont fort nombreux. Ces éléments sont ajoutés sous différentes formes telles que sels ou composés organométalliques. On obtient généralement des catalyseurs plus actifs ou plus sélectifs, parfois plus stables que le catalyseur monométallique correspondant.

Ainsi la formulation de catalyseurs utilisés dans les procédés de transformation d'hydrocarbures, en particulier celle des catalyseurs de réformage catalytique et de déshydrogénation de paraffines a fait l'objet d'un très grand nombre d'études. Parmi les promoteurs fréquemment employés, l'étain permet notamment d'accroître la sélectivité et la stabilité des catalyseurs. Ainsi, des catalyseurs à base de PtSn supportés sur alumine et utilisés dans ce type d'applications ont par exemple été décrits dans les brevets FR-B-2 031 984, US-A-3 531 543 et US-A-4 020 012.

D'autres documents tels J. Chem. Soc. Faraday Trans. 1996, 92(3) pages 461-467 et EP-A-0 913 198 concernent des catalyseurs similaires.

Les catalyseurs de reformage catalytique sont bifonctionnels car ils associent deux fonctions essentielles pour l'obtention de performances optimales : une fonction hydro-déshydrogénante, qui assure la déshydrogénation des naphtènes et l'hydrogénation de précurseurs de coke, et une fonction acide qui assure l'isomérisation des naphtènes et des paraffines, et la cyclisation des paraffines longues. La fonction hydro-déshydrogénante est généralement assurée par le platine qui présente une activité hydrogénolysante au détriment des rendements en essence et/ou aromatiques souhaités en réformage catalytique ou dans le procédé de production d'aromatiques. Cette activité hydrogénolysante peut être fortement réduite par ajout d'étain et la sélectivité du catalyseur s'en trouve alors sensiblement augmentée. Par ailleurs, l'ajout d'étain peut aussi augmenter les propriétés hydrogénantes du platine, ce qui favorise l'hydrogénation des précurseurs de coke et donc la stabilité du catalyseur. De tels catalyseurs bimétalliques présentent des performances en termes d'activité et/ou de sélectivité supérieures à celles des catalyseurs ne contenant que le métal principal catalytiquement actif (palladium, platine ou nickel). Les métaux compris dans le catalyseur sont ajoutés sous différentes formes telles que sels minéraux ou composés organométalliques. La façon dont ces modificateurs sont introduits n'est pas indifférente car elle conditionne fortement les propriétés du catalyseur.

En particulier, les catalyseurs à base de PtSn contiennent différentes formes d'étain. A l'état réduit, ces catalyseurs, supportés sur alumine, contiennent essentiellement des espèces d'étain à l'état oxydé, à savoir des espèces de l'étain divalent Sn^{II} et de l'étain tétravalent Sn^{IV} et des quantités minoritaires d'étain à l'état réduit Sn⁰ (M.C. Hobson et al, J. Catal., 142, 641-654 (1993), L.D Sharma et al, Appl. Catal. A Genneral, 168, 251-259, (1998)). Ces catalyseurs sont préparés généralement à partir d'une solution de chlorure d'étain en milieu acide (HCl, HNO₃) et d'une solution d'acide hexachloroplatinique.

Une technique qui permet d'examiner la structure électronique locale de l'étain (degré d'oxydation, environnement, liaison chimique) est la spectroscopie Mössbauer qui fournit directement deux paramètres fondamentaux: "le déplacement isomérique δ" (IS) et "l'éclatement quadripolaire Δ" (QS). Le déplacement isomérique δ qui mesure la position en énergie de l'absorption Mössbauer, fonction de la densité s au noyau caractérise directement le degré d'oxydation de l'étain. L'éclatement quadripolaire Δ, qui définit la forme de l'absorption, fonction de la répartition des charges environnantes, caractérise le motif de coordination et donc le type de liaison chimique dans laquelle est impliqué l'étain. Chaque espèce d'étain est caractérisée par un sous spectre défini par les deux paramètres IS et QS. La spectroscopie Mössbauer donne également accès à la largeur de raie LW, par comparaison avec la largeur naturelle d'émission (0,64 mm/s): la largeur de raie LW apporte des informations sur le degré d'ordre et sur la distribution des sites occupés par l'étain. L'intensité de l'absorption relative à chaque espèce est proportionnelle au nombre d'atomes d'étain et au facteur de Lamb Mössbauer f qui représente la probabilité d'absorption résonnante sans effet de recul ni d'élargissement thermique. Ce facteur f est donc directement relié à la rigidité du réseau et sa valeur est augmentée par un abaissement de la température de mesure. Il peut être faible à température ambiante (0,06 pour la phase métallique β de l'étain) et nécessiter donc des mesures à basse température. La proportion de chaque espèce est estimée à partir de leur contribution à l'absorption totale à condition que les fractions f d'absorption résonnante sans recul ne soient pas trop différentes.

L'ensemble des caractérisations par spectroscopie Mössbauer de catalyseurs réduits à base de PtSn supportés sur alumine ou sur silice mentionnent l'existence d'une espèce Sn⁰ contenue dans une phase de type PtₓSn_{y} (x et y variant de 1 à 4) pour laquelle l'étain est à l'état d'oxydation 0 (IS variant de 1,4 à 1,8 mm/s par rapport à BaSnO₃) sous une forme très proche des alliages massiques caractérisés par un éclatement quadripolaire faible ou nul (M.C. Hobson et al, J. Catal., 142, 641-654 (1993); Z. Huang et al, J. Catal., 159, 340-352 (1993); J.L. Margitfalvi et al, J. Catal., 190, 474-477 (2000); V.I. Kuznetov et al, J. Catal., 99, 159 (1986); R. Bacaud et al, J. Catal., 69, 399 (1981); R. Srinivasan et al, Catal. Today, 21, 83 (1994)). Sur alumine, la formation d'étain métallique, à l'état réduit, favorisée pour les plus grandes tailles de particules métalliques, supérieures à 2 nm serait responsable de la perte de performances de catalyseurs PtSn supportés sur alumine (Z. Huang et al, J. Catal., 159, 340-352, (1993), F. Yining et al, Stud. Surf. Sci. Catal., 68, 683-690, (1991)). Ainsi plusieurs documents décrivent l'utilisation de catalyseurs contenant une phase PtSn dispersée sur alumine où l'étain est essentiellement dans un état d'oxydation supérieur à celui de l'étain métallique (US 3 846 283, US 3 847 794). Dans de telles conditions, les méthodes de préparation classiquement utilisées ne permettent pas de garantir une association étroite entre l'étain et le platine, une association intime entre ces métaux dans le catalyseur à l'état réduit étant pourtant généralement recherchée pour exploiter au mieux l'effet bimétallique.

### Résumé de l'invention

L'objet de l'invention est défini dans les libellés des revendications 1 à 21.

L'invention est basée sur la découverte d'un nouveau catalyseur contenant au moins un métal du groupe VIII de la classification périodique des éléments et au moins de l'étain dont au moins une partie est en forte interaction avec le métal du groupe VIII. Le catalyseur supporté de l'invention est caractérisé en ce qu'il contient des particules métalliques, de petite taille, inférieure à 2 nm, et en ce qu'au moins 10 % des espèces d'étain présentes sur le catalyseur à l'état partiellement réoxydé, sont sous la forme d'une espèce d'étain réduite à l'état d'oxydation 0. Ladite espèce réduite est sous une forme particulière, mise en évidence par spectroscopie Mössbauer de ¹¹⁹Sn, et est caractérisée par une valeur très élevée d'éclatement quadripolaire, supérieure à 0,65 mm/s, et par un déplacement isomérique IS compris entre 0,8 et 2,6 mm/s par rapport à BaSnO₃. Cette espèce est révélée en soumettant le catalyseur réduit à une oxydation parfaitement contrôlée par injections discontinues d'oxygène. Cette espèce particulière d'étain est très étroitement associée au métal du groupe VIII et est révélatrice d'une très forte interaction entre les atomes dudit métal du groupe VIII et au moins une fraction de l'étain dans le catalyseur à l'état réduit. Par exemple, dans le cas où le métal du groupe VIII est le platine, il se forme une phase PtₓSn_{y} où l'étain présente des valeurs de IS et de QS déterminées. L'invention concerne également la préparation dudit catalyseur ainsi que son utilisation dans les procédés de transformation d'hydrocarbures et notamment dans les procédés de réformage catalytique.

### Intérêt de l'invention

Le catalyseur de l'invention présente des propriétés catalytiques nettement améliorées par rapport aux catalyseurs de l'art antérieur, notamment en ce qui concerne l'activité et la stabilité. En effet, il a été découvert, de manière surprenante, que la présence en forte quantité d'une espèce d'étain réduite à l'état d'oxydation 0 et associée étroitement avec un métal du groupe VIII, dans un catalyseur bimétallique partiellement oxydé par une oxydation réalisée dans des conditions parfaitement contrôlées sous injections discontinues d'oxygène, est révélatrice d'une forte interaction, à l'état réduit du catalyseur, entre le métal du groupe VIII et au moins une fraction de l'étain, garantissant un effet bimétallique bénéfique sur les performances catalytiques des unités de transformation d'hydrocarbures, telles que par exemple celles des unités de réformage catalytique, en termes d'activité et de stabilité, une meilleure activité et une meilleure stabilité permettant en effet d'augmenter très sensiblement les rendements en aromatiques, produits cibles des réactions de réformage catalytique. Dans le cas d'une application en réformage, le catalyseur de l'invention conduit à une meilleure qualité du réformat avec un indice d'octane recherche plus élevé et se désactive moins vite que les catalyseurs connus.

### Description

Le catalyseur selon l'invention comprend au moins un support, au moins un métal du groupe VIII de la classification périodique des éléments et au moins de l'étain dont au moins une partie est en forte interaction avec le métal du groupe VIII dans le catalyseur à l'état réduit. On distinguera, dans la suite de la description, le catalyseur à l'état réduit du catalyseur partiellement oxydé en ce que la quantité d'étain réduit à l'état d'oxydation 0 et en association intime avec un métal du groupe VIII est plus importante dans le catalyseur partiellement oxydé.

Le support comporte au moins un oxyde réfractaire qui est généralement choisi parmi les oxydes de métaux des groupes IIA, IIIA, IIIB, IVA ou IVB, de la classification périodique des éléments, tels que par exemple les oxydes de magnésium, d'aluminium, de silicium, de niobium, de titane, de zirconium et de thorium, pris seuls ou en mélange entre eux ou en mélange avec des oxydes d'autres éléments de la classification périodique. Pour les réactions de transformation d'hydrocarbures et notamment pour les réactions de réformage catalytique, le support préféré est l'alumine, dont la surface spécifique est avantageusement comprise entre 5 et 400 m² par gramme, et de préférence entre 50 et 350 m² par gramme. On peut aussi utiliser comme support du catalyseur de l'invention des zéolithes ou tamis moléculaires de type X, Y, mordénite, faujasite, ZSM-5, ZSM-4, ZSM-8, MFI, EUO, mazzite ainsi que les mélanges d'oxydes de métaux des groupes IIA, IIIA, IIIB, IVA et IVB avec du matériau zéolithique et en particulier les mélanges d'oxydes alumine-zéolithes.

Le métal du groupe VIII est le métal de base catalytiquement actif du catalyseur de l'invention. Préférentiellement, il s'agit d'un métal noble de la famille du platine (Pt, Pd, Rh, Ir). De manière très préférée, le métal noble est le platine. Avantageusement le catalyseur contient un premier métal noble (tel que Pt) auquel est additionné de l'iridium. En hydroréformage et en déshydrogénation de paraffines, le platine et l'iridium sont les métaux préférés. Le pourcentage pondéral est alors choisi entre 0,01 et 10 % et de préférence entre 0,05 et 5 %.

L'étain joue le rôle de promoteur. Le pourcentage pondéral de l'étain compris dans le catalyseur à l'état réduit, toutes espèces comprises (réduite et oxydées), par rapport au poids total de catalyseur est choisi par exemple entre 0,01 et 2 %. Le catalyseur de l'invention contient très avantageusement au moins 0,1 % poids d'étain. Selon l'invention, l'étain est présent dans le catalyseur réduit essentiellement à l'état oxydé (Sn^{II} et Sn^{IV}). Une caractéristique essentielle de l'invention est la forte proportion en étain métallique Sn⁰, par rapport aux espèces oxydées de l'étain, lorsque le catalyseur est dans un état partiellement oxydé, c'est-à-dire quand le catalyseur réduit a été soumis à une oxydation parfaitement contrôlée par injections discontinues d'oxygène. Cette espèce d'étain métallique Sn° est sous une forme très particulière d'alliage métal VIII-Sn, dans lequel ledit métal du groupe VIII et l'étain sont intimement associés et sont en forte interaction avec l'oxygène. Cette espèce présente des valeurs très élevées de QS comprises entre 0,65 et 2,00 mm/s et est révélée lorsque le catalyseur est partiellement oxydé. Ainsi le catalyseur de l'invention se caractérise en ce qu'à l'état partiellement oxydé au moins 10 % de l'étain par rapport à l'étain introduit est sous la forme d'une espèce réduite à l'état d'oxydation 0, c'est-à-dire que cette espèce réduite à l'état d'oxydation 0 représente au moins 10% de l'étain présent dans la masse catalytique. Avantageusement, ladite espèce d'étain réduite à l'état d'oxydation 0 représente au moins 12 % de l'étain présent dans la masse catalytique. De manière préférée, elle en représente au moins 15 %, de manière très préférée, elle en représente au moins 20 % et de manière encore plus préférée, elle en représente au moins 25 %. Très préférentiellement, elle en représente au moins 30 %.

A l'état partiellement oxydé du catalyseur, ladite espèce d'étain réduite ne représente généralement pas plus de 90% de la masse catalytique. De préférence, elle n'en représente pas plus de 70% et de manière très préférée, elle n'en représente pas plus de 60%.
Par "catalyseur à l'état partiellement oxydé", on entend un catalyseur ayant été oxydé de manière parfaitement contrôlée par injections discontinues d'oxygène. Conformément à l'invention, l'oxydation parfaitement contrôlée du catalyseur à l'état réduit permet de révéler par spectroscopie Mössbauer la présence d'une forte quantité d'étain métallique en association intime avec le métal du groupe VIII, notamment avec le platine, et l'oxygène, la présence de cette espèce d'étain réduite traduisant l'existance d'une forte interaction entre ledit métal du groupe VIII, de préférence le platine, et au moins une fraction de l'étain dans le catalyseur à l'état réduit. Le catalyseur de l'invention à l'état partiellement oxydé contient des espèces Sn²⁺ et ladite espèce d'étain réduite à l'état d'oxydation 0 (Sn⁰) est sous une forme particulière d'alliage métal VIII-Sn, préférentiellement sous la forme particulière d'alliage Pt-Sn.

Dans le cas où l'oxydation du catalyseur réduit est réalisée dans des conditions non contrôlées telles que par exemple une réoxydation sous air à forte pression partielle d'oxygène, la teneur en l'espèce d'étain métallique Sn° sous la forme de l'alliage métal VIII-Sn, de préférence sous la forme de l'alliage PtSn, diminue de manière très sensible au profit de la formation d'espèces Sn⁴⁺. Le catalyseur est alors fortement oxydé et comprend essentiellement des espèces Sn⁴⁺. Il ne contient plus d'espèces Sn²⁺. Cette formation d'espèces Sn⁴⁺ pertube la quantification d'espèces Sn en forte interaction avec le métal du groupe VIII, de préférence avec le platine, présente dès l'état réduit, ne permettant donc pas d'apprécier les performances du catalyseur à l'état réduit. L'oxydation contrôlée par injections discontinues d'oxygène permet au contraire la formation sélective de ladite espèce d'étain réduite Sn⁰ ayant les caractéristiques Mössbauer décrites ci-dessus en évitant la formation d'espèces Sn⁴⁺.

Suivant le domaine d'application, le catalyseur peut en outre contenir éventuellement, par exemple, au moins un halogène ou un composé halogéné dans des proportions de l'ordre de 0,1 à 3 % poids du catalyseur. Il peut aussi contenir au moins un métal alcalin ou un alcalino-terreux dans des proportions de l'ordre de 0,1 à 3 % poids du catalyseur. Il peut aussi éventuellement contenir au moins un métalloïde tel que le soufre dans des proportions de l'ordre de 0,01 à 2 % poids du catalyseur. Il peut aussi contenir au moins un autre élément chimique, par exemple le rhénium ou le niobium, dans des proportions de l'ordre de 0,01 à 3 % poids du catalyseur, ledit élément pouvant être introduit dans le catalyseur par toute méthode et sous toutes les formes connues de l'homme du métier.

Le catalyseur peut se présenter sous forme de billes, extrudés, trilobes ou toute forme communément utilisée. Le catalyseur de l'invention contient des particules métalliques de petites tailles, c'est-à-dire d'une taille inférieure à 2 nm. Pour des applications particulières notamment en réformage catalytique, il est avantageux d'utiliser un catalyseur ayant des particules métalliques de taille inférieure à 1,2 nm. De manière très avantageuse, la taille desdites particules n'excède pas 1 nm.

Les analyses permettant d'examiner la structure électronique locale de l'étain sont conduites sur un spectromètre Môssbauer classique équipé avec une source de rayons y Ba^{119m}SnO₃ d'activité nominale 10 mCi. Le spectromètre opère en transmission avec un transducteur de vitesse à accélération constante fonctionnant en mode triangulaire en relation avec un analyseur multicanal à 512 canaux, contrôlé par un micro-ordinateur. Le détecteur est un scintillateur à cristal NaI(Tl) d'épaisseur 0,1 mm. L'échelle des vitesses est calibrée en utilisant le spectre standard à 6 raies de α-Fe obtenu avec une source ⁵⁷Co(Rh). Tous les déplacements isomériques IS sont donnés par rapport au standard BaSnO₃. Les spectres expérimentaux sont décomposés en profils Lorentzien et les différents paramètres affinés par moindres carrés à l'aide du logiciel ISO (W. Künding, Nucl. Instrum. Method., 75, 336 (1969)).

Pour certaines analyses effectuées à basse température, il est avantageux d'utiliser un cryostat à circulation et à température variable (4 à 300 K). De telles mesures sont nécessaires pour caractériser les valeurs de f relatives à une espèce donnée.
Les analyses sont effectuées sur des catalyseurs en poudre, préalablement réduits, sous un débit d'hydrogène entre 450 et 550°C. Après retour à la température ambiante sous hydrogène et balayage sous gaz neutre comme l'hélium, le catalyseur réduit est soumis au nombre de pulses d'oxygène nécessaire pour le saturer. Les injections par pulses sont poursuivies jusqu'à l'obtention d'au moins 10 pics de surface constante (analyse chromatographique), puis on soumet le catalyseur à un balayage sous gaz neutre comme l'hélium, la cellule de traitement est scellée directement sans aucune remise à l'air. La quantité de catalyseur nécessaire tenant compte de la teneur en étain est d'au moins 2 g. Cette cellule peut être utilisée indifféremment à température ambiante ou à basse température. Le catalyseur testé en spectroscopie Mössbauer est à l'état partiellement réoxydé.

Le catalyseur à l'état partiellement oxydé, analysé par spectroscopie Mössbauer, contient de l'étain sous forme oxydée (étain divalent et tétravalent) et sous forme réduite. Selon l'invention, les espèces Sn^{IV} sont caractérisées par une valeur de déplacement isomérique IS comprise entre 0 et 0,25 mm/s et une valeur de l'éclatement quadripolaire QS comprise entre 0 et 0,80 mm/s. Les espèces Sn^{II} sont caractérisées par un IS compris entre 2,70 et 3,40 mm/s et un QS compris entre 1,60 et 2,60 mm/s. Les espèces Sn⁰ sont caractérisées par un IS compris entre 0,80 et 2.60 mm/s et un QS compris entre 0,65 et 2,00 mm/s.
Selon l'invention ladite espèce d'étain réduite à l'état d'oxydation 0 (Sn⁰) est une forme particulière d'alliage métal VIII-Sn, préférentiellement sous la forme particulière d'alliage Pt-Sn, avec des valeurs de IS, comprises entre 0,80 et 2,60 mm/s, de préférence entre 0,80 et 1,50 mm/s et de manière encore plus préférée entre 1,10 et 1,40 mm/s et avec des valeurs de QS comprises entre 0,65 et 2,00 mm/s, de préférence entre 0,80 et 2,00 mm/s, de manière préférée entre 0,90 et 1,90mm/s et de manière encore plus préférée entre 0,95 et 1,50 mm/s. Avantageusement, ladite espèce d'étain réduite à l'état d'oxydation 0 (Sn°), sous forme particulière d'alliage métal VIII-Sn, et notamment sous la forme de l'alliage PtSn, et présentant les valeurs de IS et QS tels que définis précédemment n'est présente que dans le catalyseur à l'état partiellement oxydé.

Les valeurs des paramètres Môssbauer obtenues pour le catalyseur de l'invention à l'état partiellement oxydé, traduisent l'existence, dès l'état réduit, d'une forte interaction entre au moins une fraction de l'étain et le métal du groupe VIII, cette interaction étant révélée par une oxydation parfaitement contrôlée du catalyseur réduit.

L'association très étroite entre ces deux métaux dans le catalyseur de l'invention permet d'exploiter au mieux les propriétés intrinsèques à chaque métal et génère ainsi un effet synergique, d'autant plus notable que l'espèce d'étain réduite à l'état d'oxydation 0 est en quantité importante et présente un QS élevé. Par exemple, lorsque le métal du groupe VIII est le platine, l'espèce réduite d'étain est contenue dans une phase particulière du type PtₓSn_{y} où ladite espèce d'étain réduite et le platine sont en association intime.

Le précurseur d'étain peut être choisi, sans que cette liste soit limitative, dans le groupe des composés halogénés, des hydroxydes, des oxydes, des carbonates, des carboxylates, des nitrates et des sulfates de l'étain. Il peut être introduit sous la forme d'au moins un composé organique choisi dans le groupe formé par les complexes d'étain, et les hydrocarbylétain tels que les alkyles, les cycloalkyles, les aryles, les alkylaryles et les arylalkyles étain. Le précurseur de l'étain peut encore être choisi, sans que cette liste soit limitative, dans le groupe des composés halogénés, des hydroxydes, des oxydes, des carbonates, des carboxylates, des nitrates et des sulfates de composés organométalliques de l'étain. Ces composés comprennent au moins une liaison carbone-Sn. Par exemple le précurseur de l'étain peut être choisi parmi les halogénures de polyalkyles, par exemple les halogénures de triméthyle (Me₃SnX), de triéthyle (Et₃SnX), les dihalogénures de diméthyle (Me₂SnX₂), de diéthyle (Et₂SnX₂), de diisopropyle (iPr₂SnX₂), de di-n-propyle (n-Pr₂SnX₂), les trihalogénures de méthyle (MeSnX₃), d'éthyle (EtSnX₃), d'isopropyle (iPrSnX₃), de di-n-propyle (n-PrSnX₃), les hydroxydes de polyalkyles, par exemple les hydroxydes de triméthyle (Me₃SnOH), de triéthyle (Et₃SnOH) les dihydroxydes de diméthyle (Me₂Sn(OH)₂), de diéthyle (Et₂Sn(OH)₂), de disopropyle (iPr₂Sn(OH)₂), de n-propyle (n-Pr₂Sn(OH)₂), les trihydroxydes de méthyle (MeSn(OH)₃), d'éthyle (EtSn(OH)₃), de diisopropyle (iPrSn(OH)₃), les trihydroxydes de n-propyle (n-PrSn(OH)₃), les acétates de polyalkyles, par exemple les acétates de triméthyle (Me₃SnOC(O)Me), de triéthyle (Et₃SnOC(O)Me), de tributyle (Bu₃SnOC(O)Me), les oxydes de polyalkyles, par exemple les oxydes de bis triméthyle ([Me₃Sn]₂O), de bis triéthyle ([Et₃Sn]₂O), de bis tripropyle ([Pr₃Sn]₂O), de bis tributyle ([Bu₃Sn]₂O), les sulfates de polyalkyles, par exemple les sulfates de bis triméthyle ([Me₃Sn]₂SO₄), de bis diméthyle ([Me₂Sn]SO₄), les méthyl trioxo (MeSnO₃), où X représente un halogène choisi dans le groupe constitué par le fluor, le chlore, le brome et l'iode. Le précurseur de l'étain peut être choisi parmi les composés de formule générale (R1)ₓ M (R2)_{y} (R3)_{z} avec x+y+z = valence de l'étain et où R1 est choisi dans le groupe des radicaux alkyles, cycloalkyles, nitriles (CN), carbonyles (CO), aryles, alkylaryles et arylalkyles, où R2 est une fonction de la forme CₐH_{b}R'_{c} où R' représente une fonction hydroxyde, halogénure, carboxylate, PO₃H ou SO₃H et où R3 est un groupement aquo, oxo (MO), alkoxyde (O-alkyl), hydrure, hydroxyle, alkylsulfonate, alkylsulfate, thioalkyle, N(SO₃R")₂, PR"₂ et PR"₃ où R" est un groupe alkyle. (Handbook of Physics and Chemistry, 63^{ème} édition, 1982-83). On entend par groupements alkyles des groupements comprenant des atomes de carbone et d'hydrogène, saturés, linéaires, ramifiés ou cycliques. On entend par groupements aryles les groupements aromatiques. On peut remplacer dans les composés cités ci-dessus au moins un groupement alkyle par un groupement alkényle, c'est-à-dire un groupement comprenant des atomes de carbone et d'hydrogène, insaturé, linéaire, ramifié ou cyclique, par exemple un groupement allyle.

Les précurseurs préférés de l'étain sont les composés organométalliques de type SnR₄ (R = groupe alkyle) ou encore les halogénures de polyalkyles tels que Me₃SnCl, Me₂SnCl₂, MeSnCl₃, Et₃SnCl, Et₂SnCl₂, EtSnCl₃, iPrSnCl₂ et les hydroxydes Me₃SnOH, Me₂Sn(OH)₂, Et₃SnOH, Et₂Sn(OH)₂, les oxydes [Bu₃Sn]₂O, l'acétate Bu₃SnOC(O)Me. Ces halogénures de polyalkyles comportent au moins une liaison carbone-Sn et au moins une fonction hydrosoluble, ce qui les rend solubles dans des solvants aqueux, facilitant ainsi la mise en oeuvre lors de la préparation du catalyseur.

Le composé du métal du groupe VIII peut être introduit sous la forme d'un complexe minéral ou organique et choisi par exemple, dans le cas où le métal du groupe VIII est le platine, parmi l'acide hexachloroplatinique, l'acide hexahydroxyplatinique, le platine dihydroxytétramine, le diamino nitrite de platine, ou parmi des complexes organométalliques tels que le bis acétylacétonate de platine.

La préparation du catalyseur de la présente invention comprend l'introduction, simultanée ou successive, dans n'importe quel ordre, du métal du groupe VIII, de l'étain, éventuellement de l'halogène ou du composé halogéné, éventuellement du métal alcalin ou de l'alcalino-terreux, éventuellement du métalloïde, éventuellement d'un autre élément chimique. Lorsqu'il s'agit d'une introduction successive des éléments, une fois que le premier élément est introduit, l'homme de l'art sait ensuite adapter les conditions d'introduction des autres éléments de manière à obtenir un catalyseur ayant les caractéristiques telles que définies précédemment.

L'introduction des métaux peut être réalisée lors de toutes les étapes de fabrication du catalyseur selon les techniques de l'art antérieur. Par exemple l'étain peut être ajouté à un sol d'alumine (US-A-3 929 683) ou lors de la mise en forme du support suivant par exemple, les procédures de mise en forme par extrusion (US-A-3 917 808) ou par coagulation en gouttes (US-A-3 558 508). Selon un mode de mise en oeuvre préféré du procédé de préparation de l'invention, le catalyseur est obtenu par imprégnation du support, humidifié au préalable, à l'aide d'une solution aqueuse saturée par du CO₂, contenant au moins un précurseur de l'étain sous forme SnCl₂ ou de préférence sous forme de composés organométalliques ayant au moins une liaison carbone-étain tels que par exemple les halogénures de polyalkyles tels que Me₃SnCl, Me₂SnCl₂, MeSnCl₃, Et₃SnCl, Et₂SnCl₂, EtSnCl₃, iPrSnCl₂ et les hydroxydes Me₃SnOH, Me₂Sn(OH)₂, Et₃SnOH, Et₂Sn(OH)₂, les oxydes [Bu₃Sn]₂O, l'acétate Bu₃SnOC(O)Me. Après avoir laissé en contact le solide et la solution d'imprégnation pendant plusieurs heures, le produit est filtré puis éventuellement soumis à une étape de séchage à 120°C et éventuellement de calcination entre 300 et 600 °C, de préférence entre 450 et 550°C. Le solide ainsi obtenu est imprégné de préférence par une solution organique d'au moins un composé de métal du groupe VIII, le volume de la solution étant en excès par rapport au volume de rétention du support. Après quelques heures de mise en contact, le produit obtenu est ensuite séché puis calciné sous air entre 300 et 600°C, de préférence en effectuant un balayage d'air durant plusieurs heures.

Selon un autre mode de mise en oeuvre préféré du procédé de préparation de l'invention, le métal de base catalytiquement actif tel que le platine est déposé en plusieurs étapes avant le dépôt d'étain de manière à déposer sélectivement l'étain sur des particules de taille contrôlée, c'est-à-dire sur des particules de taille supérieure à celles du catalyseur final. Par exemple, le support est imprégné par une solution organique contenant au moins un composé organométallique de platine tel que le bis acétylacétonate de platine (Pt(acac)₂), le volume de la solution étant de préférence en excès par rapport au volume de rétention du support. Après avoir laissé en contact le solide et la solution d'imprégnation pendant plusieurs heures, le produit est filtré, puis séché et calciné sous air entre 300 et 600°C, de préférence entre 400 et 500°C, en effectuant avantageusement un balayage d'air durant plusieurs heures. Il est ensuite réduit sous un balayage sous hydrogène entre 300 et 600°C, de préférence, entre 350 et 500°C. Le catalyseur est ensuite transféré sans remise à l'air dans le réacteur d'imprégnation, pour déposer à nouveau du platine suivant exactement la même procédure que précedemment. Ceci peut être pratiqué plusieurs fois. Pour le dépôt d'étain, le solide obtenu est ensuite transféré sans remise à l'air dans un réacteur où l'imprégnation d'étain se fait par mise en contact pendant plusieurs heures d'une solution aqueuse ou organique d'un composé organométallique de l'étain, le volume de la solution étant de préférence en excès par rapport au volume de rétention du support. La réaction est avantageusement effectuée en assurant un balayage d'hydrogène dans la solution d'imprégnation. Le solide ainsi obtenu est filtré, séché puis réduit sous courant d'hydrogène entre 300 et 600°C.

Quel que soit le procédé de préparation du catalyseur de l'invention, le catalyseur est avantageusement soumis avant utilisation à un traitement d'oxychloration, sous un débit de gaz comprenant de l'oxygène, du chlore et éventuellement de l'eau selon toute technique connue de l'homme du métier (US-A-3 875 049).

Avant utilisation on réduit le catalyseur sous hydrogène par exemple entre 200 et 600°C afin d'obtenir une phase métallique active. La procédure de ce traitement consiste par exemple en une montée lente de la température sous courant d'hydrogène jusqu'à la température maximale de réduction, comprise par exemple entre 200 et 600°C, de manière préférée entre 250 et 550°C et de manière encore plus préférée entre 350 et 550°C, suivie d'un maintien par exemple durant 1 à 6 heures à cette température.

Cette réduction peut être effectuée aussitôt après une calcination ou ultérieurement chez l'utilisateur. Il est aussi possible de réduire directement le produit séché chez l'utilisateur. L'invention n'est pas limitée aux modes de mise en oeuvre précédents et toute autre méthode de préparation conduisant à un catalyseur réduit présentant une forte interaction entre au moins une fraction de l'étain et un métal du groupe VIII et contenant à l'état partiellement oxydé au moins 10 % de l'étain sous la forme d'étain à l'état d'oxydation 0 où l'espèce d'étain réduite Sn⁰ présente un déplacement isomérique compris entre 0,80 et 2,60 mm/s et un éclatement quadripolaire compris entre 0,65 et 2,00 mm/s convient.

Dans le cas où le catalyseur de la présente invention contient du soufre, le soufre est introduit sur le catalyseur mis en forme, calciné, contenant le ou les métaux cités précédemment, soit *in-situ* avant la réaction catalytique, soit *ex-situ.* La sulfuration éventuelle intervient après la réduction. Dans le cas d'une sulfuration *in-situ*, la réduction, si le catalyseur n'a pas été préalablement réduit, intervient avant la sulfuration. Dans le cas d'une sulfuration *ex-situ*, on effectue la réduction puis la sulfuration. La sulfuration s'effectue en présence d'hydrogène en utilisant tout agent sulfurant bien connu de l'homme de métier, tel que par exemple le sulfure de diméthyle ou le sulfure d'hydrogène. Par exemple, le catalyseur est traité avec une charge contenant du sulfure de diméthyle en présence d'hydrogène, avec une concentration telle que le rapport atomique soufre/métal soit de 1,5. Le catalyseur est ensuite maintenu pendant environ 3 heures à environ 400°C sous débit d'hydrogène avant l'injection de la charge.

Le catalyseur à l'état réduit préparé selon l'invention peut être utilisé dans un procédé de transformation d'hydrocarbures en particulier dans les procédés d'hydrogénation et notamment dans les procédés d'hydrogénation de composés oxygénés ainsi que dans les procédés d'hydrogénation sélective de composés insaturés tels que les dioléfines et les acétyléniques. Selon l'invention, le catalyseur décrit précédemment est avantageusement mis en oeuvre dans les procédés de réformage des essences et de production d'aromatiques. Les procédés de réformage permettent d'augmenter l'indice d'octane des fractions essences provenant de la distillation du pétrole brut et/ou d'autres procédés de raffinage. Les procédés de production d'aromatiques fournissent les bases (benzène, toluène et xylènes) utilisables en pétrochimie. Ces procédés revêtent un intérêt supplémentaire en contribuant à la production de quantités importantes d'hydrogène indispensable pour les procédés d'hydrogénation et d'hydrotraitement de la raffinerie. Ces deux procédés se différencient par le choix des conditions opératoires et de la composition de la charge.

La charge typique traitée par ces procédés contient des hydrocarbures paraffiniques, naphténiques et aromatiques contenant de 5 à 12 atomes de carbone par molécule. Cette charge est définie, entre autres, par sa densité et sa composition pondérale. Cette charge est mise en contact avec le catalyseur selon la présente invention à une température comprise entre 400 et 700°C. Le débit massique de charge traitée par unité de masse de catalyseur peut varier de 0,1 à 10 kg/kg/h. La pression opératoire peut être fixée entre la pression atmosphérique et 4 MPa. Une partie de l'hydrogène produit est recyclé selon un taux de recyclage molaire compris entre 0,1 et 10. Ce taux est le rapport molaire débit d'hydrogène recyclé sur débit de charge.

Les exemples qui suivent illustrent l'invention sans toutefois en limiter la portée.

### EXEMPLE 1 (non conforme à l'invention)

On prépare un catalyseur A renfermant 0,55 % poids de platine, 0,45 % poids d'étain et 1 % poids de chlore déposé sur un support d'alumine gamma dont la surface spécifique est de 200 m²/g.
A 100 g de support alumine on ajoute 500 cm³ d'une solution aqueuse contenant du chlorure d'étain, en présence d'acide chlorhydrique et d'acide nitrique. On laisse en contact 3 heures, on filtre, on sèche à 120°C puis on calcine pendant 2 heures à 500°C sous un débit d'air de 100 litres par heure. On met ensuite le solide en contact avec 500 cm³ d'une solution aqueuse d'acide hexachloroplatinique et d'acide chlorhydrique. On laisse en contact 3 heures puis on essore. On sèche 1 heure à 120°C puis on calcine pendant 2 heures à 500 °C sous un débit d'air de 100 litres par heure.

Le catalyseur A est ensuite réduit à 500 °C pendant 4 heures sous un débit d'hydrogène de 100 litres par heure. L'analyse par microscopie électronique à balayage (MEB) montre la très bonne dispersion de la phase métallique avec des tailles de particules inférieures à 1,2 nm.

### EXEMPLE 2 (selon l'invention)

On prépare un catalyseur B de même formulation que le catalyseur A.
Le catalyseur B est préparé par dépôt de platine en deux étapes avant l'étain. On met en contact 100 g de support alumine avec 500 cm³ d'une solution organique de bis acétylacétonate de platine. On laisse en contact 12 heures puis on essore. On séche 1 h à 120°C puis on calcine pendant 2 heures à 350°C sous un débit d'air de 100 litres par heure. On réduit ensuite le catalyseur à 450°C pendant 4 heures sous un débit d'hydrogène de 100 litres par heure. Après cette étape de réduction, le solide est ensuite transféré sans remise à l'air dans un réacteur contenant 500 cm³ d'une solution organique de bis acétylacétonate de platine. On laisse en contact 12 heures puis on essore. On séche 1 h à 120°C puis on calcine pendant 2 heures à 350°C sous un débit d'air de 100 litres par heure. On réduit ensuite le catalyseur à 450°C pendant 4 heures sous un débit d'hydrogène de 100 litres par heure. Le solide ainsi obtenu est ensuite transféré sans remise à l'air dans un réacteur contenant 500 cm³ d'une solution organique contenant une quantité nécessaire de tétrabutylétain pour déposer 0,45 % poids sur le catalyseur en présence d'un bullage d'hydrogène à 20°C. Après 24 heures de mise en contact, le mélange réactionnel est filtré, lavé puis séché à 70°C. Le catalyseur est ensuite réduit pendant 4 heures à 450°C sous 100 litres par heure d'hydrogène. Le catalyseur est ensuite soumis à un traitement d'oxychloration à 500°C pendant 4 heures sous un débit de 100 litres par heure d'air contenant la quantité de chlore nécessaire pour déposer 1 % poids de chlore et une quantité d'eau correspondant au rapport molaire H₂O/Cl de 20.

Le catalyseur B est ensuite réduit à 500 °C pendant 4 heures sous un débit d'hydrogène de 100 litres par heure. L'analyse par microscopie électronique à balayage (MEB) montre la très bonne dispersion de la phase métallique avec des tailles de particules inférieures à 1,2 nm.

### EXEMPLE 3 (selon l'invention)

On prépare un catalyseur C renfermant 0,66 % poids de platine, 0,58 % poids d'étain et 1 % poids de chlore déposé sur un support d'alumine gamma dont la surface spécifique est de 200 m²/g. A 100 g de support alumine on ajoute 60 cm³ d'une solution d'heptane contenant du tétrabutyl étain. On laisse en contact 6 heures, on séche à 120°C, puis on calcine pendant 2 heures à 350°C sous un débit d'air de 100 litres par heure. Ensuite, on met en contact 100 g de support alumine avec 500 cm³ d'une solution organique de bis acétylacétonate de platine. On laisse en contact 12 heures puis on essore. On séche 1 h à 120°C puis on calcine pendant 2 heures à 350°C sous un débit d'air de 100 litres par heure. Le catalyseur est ensuite soumis à un traitement d'oxychloration à 500°C pendant 4 heures sous un débit de 100 litres par heure d'air contenant la quantité de chlore nécessaire pour déposer 1 % poids de chlore sur le catalyseur et une quantité d'eau correspondant au rapport molaire H2O/Cl de 20. Le catalyseur est ensuite réduit à 500°C sous un débit d'hydrogène de 100 litres par heures pendant 4 heures.

### EXEMPLE 4 : Caractérisation par spectroscopie Mössbauer

Pour la caractérisation par spectrométrie Mössbauer de ¹¹⁹Sn, on traite les catalyseurs A, B et C réduits, obtenus précédemment, à l'aide d'un appareillage χsorb qui permet de pratiquer des mesures de chimisorption d'oxygène en dynamique en liaison avec une analyse chromatographique en ligne fournissant la consommation d'oxygène. Le volume de la cellule utilisée est d'environ 10 cm³.

Dans chaque cas, on active 2 grammes de catalyseur à 500 °C pendant 4 heures sous débit d'hydrogène. Après retour à la température ambiante sous hydrogène et balayage sous débit l'hélium, le catalyseur est soumis au nombre de pulses d'oxygène nécessaire pour saturer le catalyseur c'est-à-dire jusqu'à ce qu'apparaissent des pics de surface constante indiquant la consommation totale d'oxygène. Le volume d'un pulse d'oxygène pur est de 0.22 cm³. Les injections par pulses sont poursuivies jusqu'à l'obtention d'au moins 10 pics de surface constantes, correspondant à l'oxygène qui n'a pas réagit avec le catalyseur. Ensuite après balayage sous l'hélium à température ambiante, la cellule de traitement est scellée directement sans aucune remise à l'air. Les analyses par spectrométrie Mössbauer sont réalisées avec cette cellule qui est ensuite refroidie à la température de l'azote liquide dans le cryostat à circulation. L'enregistrement du spectre est alors réalisé en transmission selon le dispositif décrit précédemment. Le temps d'acquisition des données est choisi pour avoir le meilleur rapport signal / bruit. Dans les exemples présentés il est de 48 heures.

Les résultats comportant l'identification, les caractéristiques et les teneurs des différentes espèces d'étain présentes pour les catalyseurs A, B et C réduits puis partiellement réoxydés de manière contrôlée par pulses d'oxygène sont rassemblés dans le tableau 1:

**Tableau 1**

| Catalyseur | attribution espèces | IS | QS | LW | Proportion |
|---|---|---|---|---|---|
| | | (mm/s) | (mm/s) | (mm/s) | (%) |
| A | Sn^{IV} | -0,02 (0,01) | 0,61 (0,02) | 0,83 (0,02) | 75,6 |
| | Sn^{II} | 3,38 (0,04) | 2,35 (0,06) | 0,83 (0,08) | 16,7 |
| | Sn⁰ | 1,32 (0,04) | 1,26 (0,02) | 0,91 (0,04) | 7,7 |
| | | | | | |
| B | Sn^{IV} | 0,02 (0,01) | 0,58 (0,01) | 0,87 (0,01) | 61,6 |
| | Sn^{II} | 3,15 (0,02) | 1,10 (0,06) | 0,87 (0,01) | 2,9 |
| | Sn⁰ | 1,26 (0,02) | 1,24 (0,03) | 1,08 (0,04) | 35,5 |
| | | | | | |
| C | Sn^{IV} | 0,09 (0,02) | 0,73 (0,02) | 0,90 (0,03) | 62,0 |
| | Sn^{II} | 3,00 (0,04) | 1,97 (0,04) | 0,90 (0,06) | 16,0 |
| | Sn⁰ | 0,80 (0,08) | 1,30 (0,08) | 0,90 (0,06) | 22,0 |

| | | | | | |
|---|---|---|---|---|---|
| IS : déplacement isomérique par rapport à BaSnO₃. QS : éclatement quadripolaire Δ LW : largeur des raies à mi-hauteur Les valeurs données entre parenthèses correpondent aux écarts types. | | | | | |

Comme on peut le constaster, pour une même formulation, le catalyseur B selon l'invention, contient une teneur de l'espèce Sn⁰ contenue dans la phase PtₓSn_{y}(QS de 1,24 mm/s) très supérieure à celle déterminée pour le catalyseur A non conforme à l'invention et qui correspond aux catalyseurs de l'art antérieur.

### EXEMPLE 5

Les catalyseurs A et B, à l'état réduit, et décrits précédemment ont été testés en transformation d'une charge dont les caractéristiques sont les suivantes:

| | |
|---|---|
| masse volumique à 20°C | 0,753 kg/dm³ |
| indice d'octane recherche | ~60 |
| teneur en paraffines | 49,4 % volume |
| teneur en naphtènes | 35,1 % volume |
| teneur en aromatiques | 15,5% volume |

Cette transformation est réalisée en présence d'hydrogène en respectant les conditions opératoires suivantes :

| | |
|---|---|
| température | 500°C |
| pression totale | 0.3 MPa |
| débit de charge | 3.3 kg par kg de catalyseur |
| Hydrogène/charge | 5 (molaire) |

Avant injection de la charge, les catalyseurs sont activés à 500 °C sous hydrogène pendant 4 heures. Les performances obtenues sont reportées dans le tableau 2:

**Tableau 2**

| Catalyseur | Durée (heure) | Indice d'octane Recherche | Rendement réformat (% poids) | Rendement aromatiques (% poids) |
|---|---|---|---|---|
| A | 30 | 100.3 | 92.2 | 70.2 |
| | 73 | 98.6 | 92.4 | 66.71 |
| | | | | |
| B | 30 | 102.6 | 91.7 | 74.0 |
| | 73 | 101.4 | 92.2 | 72.2 |

Les indices d'octane recherche et les rendements en aromatiques produits par le catalyseur B sont nettement supérieurs à ceux du catalyseur A.

## Revendications

1. Catalyseur, à l'état réduit, comprenant au moins un support, au moins un métal du groupe VIII de la classification périodique des éléments, au moins de l'étain dont une partie au moins est sous forme d'une espèce réduite à l'état d'oxydation 0 lorsque ledit catalyseur est à l'état partiellement oxydé, ladite espèce, mise en évidence par spectroscopie Mössbauer de ¹¹⁹Sn, présentant un déplacement isomérique IS compris entre 0,80 et 2,60 mm/s par rapport à BaSnO₃ et un éclatement quadripolaire compris entre 0,65 et 2,00 mm/s, ledit catalyseur étant **caractérisé en ce qu'**à l'état partiellement oxydé ladite espèce réduite à l'état d'oxydation 0 représente au moins 10 % de l'étain présent dans la masse catalytique l'oxydation partielle dudit catalyseur étant réalisée en soumettant le catalyseur réduit à un nombre de pulses d'oxygène nécessaire pour saturer ledit catalyseur, les injections par pulses étant poursuivies jusqu'à l'obtention d'au moins dix pics de surface constante en analyse chromatographique, le catalyseur étant ensuite soumis à un balayage sous gaz neutre, la mesure par spectroscopie Mössbauer de ¹¹⁹Sn étant ensuite réalisée directement sans aucune remise d'air.

2. Catalyseur selon la revendication 1 **caractérisé en ce qu'**à l'état partiellement oxydé ladite espèce d'étain réduite à l'état d'oxydation 0 représente au moins 12 % de l'étain présent.

3. Catalyseur selon la revendication 1 ou la revendication 2 **caractérisé en ce qu'**à l'état partiellement oxydé ladite espèce d'étain réduite à l'état d'oxydation 0 représente au moins 15 % de l'étain présent.

4. Catalyseur selon l'une des revendications 1 à 3 **caractérisé en ce qu'**à l'état partiellement oxydé ladite espèce d'étain réduite à l'état d'oxydation 0 représente au moins 20 % de l'étain présent.

5. Catalyseur selon l'une des revendications 1 à 4 **caractérisé en ce qu'**à l'état partiellement oxydé ladite espèce d'étain réduite à l'état d'oxydation 0 représente au moins 25 % de l'étain présent.

6. Catalyseur selon l'une des revendications 1 à 5 **caractérisé en ce qu'**à l'état partiellement oxydé ladite espèce d'étain réduite à l'état d'oxydation 0 représente au moins 30 % de l'étain présent.

7. Catalyseur selon l'une des revendications 1 à 6 **caractérisé en ce que** ladite espèce d'étain réduite à l'état d'oxydation 0 présente un déplacement isomérique compris entre 0,80 et 1,50 mm/s.

8. Catalyseur selon l'une des revendications 1 à 7 **caractérisé en ce que** ladite espèce d'étain réduite à l'état d'oxydation 0 présente un éclatement quadripolaire compris entre 0,80 et 2,00 mm/s.

9. Catalyseur selon l'une des revendications 1 à 8 **caractérisé en ce que** ladite espèce d'étain réduite à l'état d'oxydation 0 présente un éclatement quadripolaire compris entre 0,90 et 1,90 mm/s.

10. Catalyseur selon l'une des revendications 1 à 9 **caractérisé en ce que** ladite espèce d'étain réduite à l'état d'oxydation 0 présente un éclatement quadripolaire compris entre 0,95 et 1,50 mm/s.

11. Catalyseur selon l'une des revendications 1 à 10 **caractérisé en ce qu'**à l'état partiellement oxydé il contient des espèces Sn²⁺.

12. Catalyseur selon l'une des revendications 1 à 11 **caractérisé en ce qu'**il comprend au moins un halogène ou un composé halogéné.

13. Catalyseur selon l'une des revendications 1 à 12 **caractérisé en ce qu'**il comprend au moins un métal alcalin ou alcalino-terreux.

14. Catalyseur selon l'une des revendications 1 à 13 **caractérisé en ce qu'**il comprend au moins un métalloïde.

15. Catalyseur selon l'une des revendications 1 à 14 **caractérisé en ce que** le métal du groupe VIII est le platine.

16. Catalyseur selon l'une des revendications 1 à 15 **caractérisé en ce que** le support est l'alumine.

17. Catalyseur selon l'une des revendications 1 à 16 **caractérisé en ce qu'**il contient des particules métalliques de taille inférieure à 2 nm.

18. Procédé de préparation d'un catalyseur selon l'une des revendications 1 à 17 comprenant le dépôt du métal du groupe VIII en plusieurs étapes avant le dépôt de l'étain.

19. Procédé selon la revendication 18 comprenant une étape de traitement d'oxychloration.

20. Procédé pour la transformation d'hydrocarbures comprenant la mise en contact de la charge hydrocarbonée avec le catalyseur selon l'une des revendications 1 à 17 ou préparé selon l'une des revendications 18 et 19.

21. Procédé selon la revendication 20 tel que le type de transformation d'hydrocarbures est le réformage catalytique.

## Claims

1. A catalyst, in the reduced state, comprising at least one support, at least one metal from group VIII of the periodic table, at least tin, at least a portion of which is in the form of a reduced species with oxidation state 0 when said catalyst is in the partially oxidised state, said species, as demonstrated by ¹¹⁹Sn Mössbauer spectroscopy, having an isomer shift IS in the range 0.80 to 2.60 mm/s with respect to BaSnO₃ and with a quadrupolar splitting in the range 0.65 to 2.00 mm/s, said catalyst being **characterized in that** in the partially oxidised state, said reduced species with oxidation state 0 represents at least 10% of the tin present in the catalytic mass, the partial oxidation of said catalyst being carried out by submitting the reduced catalyst to a number of pulses of oxygen necessary to saturate it, pulsed injections being continued until at least 10 peaks are obtained with a constant surface area in chromatographic analysis, the catalyst being then flushed with a neutral gasoline, the measurement by ¹¹⁹Sn Mössbauer spectroscopy being then carried out directly without ingress of air.

2. A catalyst according to claim 1, **characterized in that** in the partially oxidised state, said reduced tin species with oxidation state 0 represents at least 12% of the tin present.

3. A catalyst according to claim 1 or claim 2, **characterized in that** in the partially oxidised state, said reduced tin species with oxidation state 0 represents at least 15% of the tin present.

4. A catalyst according to any one of claims 1 to 3, **characterized in that** in the partially oxidised state, said reduced tin species with oxidation state 0 represents at least 20% of the tin present.

5. A catalyst according to any one of claims 1 to 4, **characterized in that** in the partially oxidised state, said reduced tin species with oxidation state 0 represents at least 25% of the tin present.

6. A catalyst according to any one of claims 1 to 5, **characterized in that** in the partially oxidised state, said reduced tin species with oxidation state 0 represents at least 30% of the tin present.

7. A catalyst according to any one of claims 1 to 6, **characterized in that** said reduced tin species with oxidation state 0 has an isomer shift in the range 0.80 to 1.50 mm/s.

8. A catalyst according to any one of claims 1 to 7, **characterized in that** said reduced tin species with oxidation state 0 has a quadrupolar splitting in the range 0.80 to 2.00 mm/s.

9. A catalyst according to any one of claims 1 to 8, **characterized in that** said reduced tin species with oxidation state 0 has a quadrupolar splitting in the range 0.90 to 1.90 mm/s.

10. A catalyst according to any one of claims 1 to 9, **characterized in that** said reduced tin species with oxidation state 0 has a quadrupolar splitting in the range 0.95 to 1.50 mm/s.

11. A catalyst according to any one of claims 1 to 10, **characterized in that** in the partially oxidised state, it contains Sn²⁺ species.

12. A catalyst according to any one of claims 1 to 11, **characterized in that** it comprises at least one halogen or halogenated compound.

13. A catalyst according to any one of claims 1 to 12, **characterized in that** it comprises at least one alkali metal or alkaline-earth metal.

14. A catalyst according to any one of claims 1 to 13, **characterized in that** it comprises at least one metalloid.

15. A catalyst according to any one of claims 1 to 14, **characterized in that** the group VIII metal is platinum.

16. A catalyst according to any one of claims 1 to 15, **characterized in that** the support is alumina.

17. A catalyst according to any one of claims 1 to 16, **characterized in that** it contains metallic particles less than 2 nm in size.

18. A process for preparing a catalyst according to any one of claims 1 to 17, comprising depositing the group VIII metal in a plurality of steps prior to depositing the tin.

19. A process according to claim 18, comprising an oxychlorination treatment step.

20. A process for transforming hydrocarbons comprising bringing a hydrocarbon feed into contact with a catalyst according to any one of claims 1 to 17 or prepared according to claim 18 or claim 19.

21. A process according to claim 20, in which the hydrocarbon transformation process is catalytic reforming.

## Patentansprüche

1. Katalysator, in reduziertem Zustand, der mindestens einen Träger, mindestens ein Metall der Gruppe VIII des Periodensystems der Elemente, mindestens Zinn umfasst, von dem mindestens ein Teil in Form einer reduzierten Spezies in Oxidationsstufe 0 ist, wenn der Katalysator in teilweise oxidiertem Zustand ist, wobei die Spezies, die mittels ¹¹⁹Sn-Mössbauer-Spektroskopie nachgewiesen wird, eine Isomerverschiebung IV im Bereich zwischen 0,80 und 2,60 mm/Sek., bezogen auf BaSnO₃, und eine quadrupolare Aufspaltung im Bereich zwischen 0,65 und 2,00 mm/Sek. aufweist, wobei der Katalysator **dadurch gekennzeichnet ist, dass** in teilweise oxidiertem Zustand die reduzierte Spezies mit Oxidationsstufe 0 mindestens 10 % des Zinns bildet, das in der katalytischen Masse vorhanden ist, wobei die teilweise Oxidation des Katalysators ausgeführt wird, indem der reduzierte Katalysator einer Anzahl von Sauerstoffimpulsen unterzogen wird, die notwendig sind, um den Katalysator zu sättigen, wobei die Injektionen durch Impulse bis zum Erhalt von mindestens zehn konstanten Oberflächenpeaks in der chromatographischen Analyse fortgesetzt werden, wobei der Katalysator anschließend einer Spülung unter neutralem Gas unterzogen wird, wobei das Messen mittels ¹¹⁹Sn-Mössbauer-Spektroskopie anschließend direkt ausgeführt wird, ohne erneutes Aussetzen an Luft.

2. Katalysator nach Anspruch 1, **dadurch gekennzeichnet, dass** in teilweise oxidiertem Zustand, die reduzierte Zinnspezies mit Oxidationsstufe 0 mindestens 12 % des vorhandenen Zinns bildet.

3. Katalysator nach Anspruch 1 oder Anspruch 2, **dadurch gekennzeichnet, dass** in teilweise oxidiertem Zustand, die reduzierte Zinnspezies mit Oxidationsstufe 0 mindestens 15 % des vorhandenen Zinns bildet.

4. Katalysator nach einem der Ansprüche 1 bis 3, **dadurch gekennzeichnet, dass** in teilweise oxidiertem Zustand, die reduzierte Zinnspezies mit Oxidationsstufe 0 mindestens 20 % des vorhandenen Zinns bildet.

5. Katalysator nach einem der Ansprüche 1 bis 4, **dadurch gekennzeichnet, dass** in teilweise oxidiertem Zustand, die reduzierte Zinnspezies mit Oxidationsstufe 0 mindestens 25 % des vorhandenen Zinns bildet.

6. Katalysator nach einem der Ansprüche 1 bis 5, **dadurch gekennzeichnet, dass** in teilweise oxidiertem Zustand, die reduzierte Zinnspezies mit Oxidationsstufe 0 mindestens 30 % des vorhandenen Zinns bildet.

7. Katalysator nach einem der Ansprüche 1 bis 6, **dadurch gekennzeichnet, dass** die reduzierte Zinnspezies mit Oxidationsstufe 0 eine Isomerverschiebung im Bereich zwischen 0,80 und 1,50 mm/Sek. aufweist.

8. Katalysator nach einem der Ansprüche 1 bis 7, **dadurch gekennzeichnet, dass** die reduzierte Zinnspezies mit Oxidationsstufe 0 eine quadrupolare Aufspaltung im Bereich zwischen 0,80 und 2,00 mm/Sek. aufweist.

9. Katalysator nach einem der Ansprüche 1 bis 8, **dadurch gekennzeichnet, dass** die reduzierte Zinnspezies mit Oxidationsstufe 0 eine quadrupolare Aufspaltung im Bereich zwischen 0,90 und 1,90 mm/Sek. aufweist.

10. Katalysator nach einem der Ansprüche 1 bis 9, **dadurch gekennzeichnet, dass** die reduzierte Zinnspezies mit Oxidationsstufe 0 eine quadrupolare Aufspaltung im Bereich zwischen 0,95 und 1,50 mm/Sek. aufweist.

11. Katalysator nach einem der Ansprüche 1 bis 10, **dadurch gekennzeichnet, dass** er in teilweise oxidiertem Zustand Sn²⁺-Spezies enthält.

12. Katalysator nach einem der Ansprüche 1 bis 11, **dadurch gekennzeichnet, dass** er mindestens ein Halogen oder eine halogenierte Verbindung umfasst.

13. Katalysator nach einem der Ansprüche 1 bis 12, **dadurch gekennzeichnet, dass** er mindestens ein Alkali- oder Erdalkalimetall umfasst.

14. Katalysator nach einem der Ansprüche 1 bis 13, **dadurch gekennzeichnet, dass** er mindestens ein Metalloid umfasst.

15. Katalysator nach einem der Ansprüche 1 bis 14, **dadurch gekennzeichnet, dass** das Metall der Gruppe VIII Platin ist.

16. Katalysator nach einem der Ansprüche 1 bis 15, **dadurch gekennzeichnet, dass** das der Träger Aluminiumoxid ist.

17. Katalysator nach einem der Ansprüche 1 bis 16, **dadurch gekennzeichnet, dass** er metallische Teilchen mit einer Größe von weniger als 2 nm enthält.

18. Verfahren zur Herstellung eines Katalysators nach einem der Ansprüche 1 bis 17, das die Abscheidung des Metalls der Gruppe VIII in mehreren Schritten vor der Abscheidung des Zinns umfasst.

19. Verfahren nach Anspruch 18, das einen Schritt der Oxychlorierungsbehandlung umfasst.

20. Verfahren zur Umformung von Kohlenwasserstoffen, das das In-Kontakt-Bringen der Kohlenwasserstoffbeschickung mit dem Katalysator nach einem der Ansprüche 1 bis 17 oder umfasst nach einem der Ansprüche 18 und 19, umfasst.

21. Verfahren nach Anspruch 20, so dass die Art der Umformung von Kohlenwasserstoffen die katalytische Reformierung ist.
